# EUROPÄISCHE PATENTSCHRIFT

(11) **EP 1 368 171 B1**
(45) Veröffentlichungstag und Bekanntmachung des Hinweises auf die Patenterteilung: **06.12.2006**
(21) Anmeldenummer: 02719949.6
(22) Anmeldetag: 28.02.2002
(51) Int. Cl.: B28B 3/26, B01J 35/04

(54) **VERFAHREN ZUM HERSTELLEN VON EXTRUDIERTEN WABENKÖRPERN UND EXTRUDIERWERKZEUG**
METHOD OF PRODUCING EXTRUDED HONEYCOMB BODIES AND EXTRUSION TOOL
PROCEDE POUR PRODUIRE DES CORPS EN NID D'ABEILLES EXTRUDES ET OUTIL D'EXTRUSION

(30) Priorität: 16.03.2001 DE 10113290
(43) Veröffentlichungstag der Anmeldung: 10.12.2003
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); MAUS, Wolfgang, 51429 Bergisch Gladbach (DE)
(74) Vertreter: Herzog, Martin
(86) Internationale Anmeldenummer: PCT/EP2002/002122
(87) Internationale Veröffentlichungsnummer: WO 2002/074510

(56) Entgegenhaltungen:
- WO-A-98/33593
- US-A- 3 983 283
- US-A- 4 177 307
- US-A- 4 276 071
- US-A- 4 416 676
- US-A- 4 814 187

## Beschreibung

Die Erfindung bezieht sich auf ein Verfahren zum Herstellen von extrudierten Wabenkörpern mit Kanälen, die von Wandbereichen begrenzt sind, welche zumindest teilweise Strukturen aufweisen. Derartige Wabenkörper werden insbesondere als Katalysator-Trägerkörper zur Reinigung von Abgasen einer Verbrennungskraftmaschine eingesetzt. Weiterhin betrifft die vorliegende Erfindung ein Extrudierwerkzeug zur Herstellung derartiger Wabenkörper.

Der Hauptanteil eines solchen extrudierten Wabenkörpers ist üblicherweise aus keramischem Material. Das Extrudierverfahren läuft dabei gewöhnlich so ab, dass die zum Teil keramischen Rohstoffe einem Extruder zugeführt werden. Der Extruder mischt und verdichtet gegebenenfalls die unterschiedlichen Rohstoffe mit Hilfe einer sogenannten Schnecke und fördert diese Masse zum Extrudierwerkzeug. Die verdichtete Masse wird nun durch das Extrudierwerkzeug gepresst, wobei zumeist endlose Profile entstehen, die anschließend thermisch behandelt werden. Die genaue Form eines extrudierten Wabenkörpers hängt dabei primär von dem Extrudierwerkzeug ab, das im Prinzip eine Maske bildet. Vor der thermischen Behandlung wird ein derartig extrudierter Wabenkörper "Grünling" genannt, wobei dieser aufgrund des Herstellungsverfahrens im wesentlichen glatte Konturen der den Wabenkörper durchziehenden Kanalwände aufweist.

In Hinblick auf die bevorzugte Verwendung derartiger keramischer Wabenkörper als Katalysator-Trägerköiper in einem Abgassystem ist es jedoch wünschenswert, die Kanalwände im Inneren des Wabenkörpers mit Strukturen zu versehen, wie dies bei metallischen Wabenkörpern bereits mit guter Wirkung gemacht wird. Normalerweise werden die Kanalwände mit einer katalytisch aktiven Beschichtung versehen, wobei gewährleistet sein muss, dass das den Wabenkörper durchströmende Abgas einen intensiven Kontakt zu dieser katalytisch aktiven Oberfläche hat, um eine effektive Reinigung des Abgases von Schadstoffen sicherzustellen. Die Strukturen der Kanalwände führen so einerseits zur Verwirbelung des durchströmenden Abgases, zu einer verstärkten Diffusion und/oder verlängern die Verweilzeit des Abgases im Wabenkörper, ohne dass die äußeren Abmessungen des Wabenkörpers verändert werden müssen.

Ein Verfahren zur Herstellung von keramischen Wabenkörpern mit Strukturen aufweisenden Kanälen ist beispielsweise aus dem Dokument U.S. 5,487,865 bekannt. Dabei wird vorgeschlagen, zunächst regelmäßig aufgebaute Wabenkörper zu extrudieren, wobei die Grünlinge anschließend relativ zueinander versetzt zusammengefügt werden. Insbesondere wird vorgeschlagen, die extrudierten Grünlinge in scheibenförmige Segmente zu unterteilen, diese gegeneinander zu verdrehen und zusammenzusetzen, wobei mit Hilfe eines Sinterprozesses die einzelnen Scheiben zum endgültigen Wabenkörper zusammengefügt werden. Auf diese Weise könne ein gewundener Strömungspfad im Wabenkörper hergestellt werden. Die Herstellung von Strukturen der Kanalwände entsprechend diesem Verfahren gestaltet sich jedoch insbesondere unter fertigungstechnischen Gesichtspunkten als sehr schwierig. Da gemäß diesem Verfahren jeweils nur an den Kanten der scheibenförmigen Segmente eine Struktur entsteht, ist die Anzahl der Strukturen pro Kanal von der Dicke der Segmente abhängig. Demnach müssen die Segmente zur Generierung einer hohen Strukturanzahl pro Kanal relativ dünn ausgeführt werden, wodurch eine automatisierte Fertigung derartiger Wabenkörper große Probleme bereitet.

Weitere Ausgestaltungen von keramischen Wabenkörpern mit unterschiedlichen Wanddicken bzw. diversen Anordnungen der Wände zueinander gehen beispielsweise aus der WO 98/33593, der US 4,276,071, der US 4,177,307 oder der US 4,416,676 hervor.

In Anbetracht der vielfältigen Formen solcher Kanäle wurden bereits auch diverse Extrusionsmaschinen vorgeschlagen. So wird beispielsweise in der US 4,814,187 eine Extrudiermaske vorgeschlagen, der eine perforierte Platte vorgesetzt ist, um eine gleichmäßige Ausgestaltung der Wabenstruktur zu ermöglichen. In der US 3,983,283 werden Vorrichtungen und Verfahren zur Herstellung von keramischen Wabenkörpern beschrieben, die Unterbrechungen in den Kanalwänden aufweisen. Dazu können die Extrusionsdüsen durch diverse Zapfen teilweise verschlossen werden.

Aufgabe der vorliegenden Erfindung ist es, ein Verfahren zur Herstellung von extrudierten Wabenkörpern anzugeben, wobei die Herstellung von Strukturen der Kanalwände auch in hoher Anzahl pro Kanallänge möglich ist. Dabei soll insbesondere die Prozesssicherheit in Hinblick auf eine kontinuierliche Herstellung von derartigen Wabenkörpern verbessert werden. Weiterhin soll ein Extrudierwerkzeug angegeben werden, welches insbesondere zur Herstellung derartiger Wabenkörper geeignet ist.

Diese Aufgaben werden gelöst durch ein Verfahren zum Herstellen von extrudierten Wabenkörpern gemäß den Merkmalen des Anspruchs 1 sowie mittels eines Extrudierwerkzeugs gemäß den Merkmalen des Anspruchs 10. Weitere vorteilhafte Ausgestaltungen sind in den jeweils abhängigen Ansprüchen beschrieben.

Das vorgeschlagene Verfahren dient der Herstellung von extrudierten Wabenkörpern mit Kanälen, insbesondere als Katalysator-Trägerkörper zur Reinigung von Abgasen einer Verbrennungskraftmaschine, wobei die Kanäle von Wandbereichen begrenzt sind, die zumindest teilweise mit Strukturen versehen sind. Dabei wird erfindungsgemäß der Wabenkörper mit einem Extrudierwerkzeug so extrudiert, dass eine zusätzliche Relativbewegung zwischen dem Wabenkörper und dem Extrudierwerkzeug stattfindet, die zu einer Verformung der Wandbereiche der Kanäle führt. Das bedeutet, dass der extrudierte Grünling direkt nach dem Austritt aus dem Extrudierwerkzeug relativ zur Extrudiermaske bewegt wird. Somit wird kontinuierlich ein Strangprofil hergestellt, das letztendlich in der gewünschten Länge abgetrennt werden kann. Die Relativbewegung ist dabei so einzustellen, dass eine Beschädigung der Kanalwände, insbesondere ein Zerbrechen von Wandbereichen oder verstopfte Kanäle vermieden werden. Somit können auch in Hinblick auf eine Serienfertigung keramische Wabenkörper mit gleichbleibender Qualität hinsichtlich der strukturierten Kanalwände hergestellt werden.

Dabei wird vorgeschlagen, dass der Wabenkörper während des Extrudierens zumindest zeitweise gestreckt und/oder gestaucht wird. Das Stauchen oder Strecken des Grünlings, insbesondere unmittelbar nach dem Austritt aus dem Extrudierwerkzeug, hat unterschiedliche Materialverteilungen des Wabenkörpers in Extrudierrichtung zur Folge. So werden die Wandbereiche der Kanäle unterschiedlich dick ausgeführt. Folglich entstehen beispielsweise ringförmige, wulstartige Mikrostrukturen auf den Wandbereichen der Kanäle. Dieser Stauch- und/oder Streckvorgang ist dabei so auszuführen, dass ein Verschließen der Kanäle verhindert wird.

Diese Relativbewegung ist vorzugsweise als Rotation zwischen dem Extrudierwerkzeug und dem Wabenkörper ausgeführt. Dabei rotiert zumindest das Extrudierwerkzeug oder der Wabenkörper zeitweise während des Extrudierens. Eine derartige Rotation führt gegebenenfalls zu einer gewindeförmigen Ausgestaltung der Kanäle, wobei die Kanallänge in Relation zur axialen Erstreckung des Wabenkörpers vergrößert wird. Die Rotationsgeschwindigkeit ist dabei von dem verwendeten Material und der verwendeten Extrudiermaske abhängig. So ist die Rotationsgeschwindigkeit geringer zu wählen, umso filigraner die extrudierten Kanalwände sind, um deren Beschädigung zu vermeiden.

Gemäß einer weiteren Ausgestaltung des Verfahrens wird vorgeschlagen, die Relativbewegung durch ein zumindest zeitweises Versetzen des Wabenkörpers bzw. des Extrudierwerkzeugs in Relation zu einer bevorzugten Extrudierrichtung zu generieren. Dabei können Kanäle gebildet werden, die Absätze oder Stufen aufweisen, wobei die Kanalwanddicke im wesentlichen konstant gehalten werden kann. Die Stufen bzw. Absätze dienen hinsichtlich eines Einsatzes derartiger Wabenkörper als Katalysator-Trägerkörper als Strömungsumlenkflächen, so dass eine Verwirbelung des durchströmenden Abgases erreicht wird.

Gemäß noch einer weiteren Ausgestaltung des Verfahrens führt der Wabenkörper und/oder das Extrudierwerkzeug während des Extrudierens zumindest zeitweise eine oszillierende Bewegung in Relation zu einer bevorzugten Extrudierrichtung aus. Auf diese Weise werden wellenförmige Kanäle gebildet, wobei die Frequenz der oszillierenden Bewegung letztendlich die Anzahl von Strukturen über die Kanallänge definiert. Auf diese Weise werden relativ gleichmäßig über der Kanallänge verteilte Strukturen hergestellt, wobei auch eine hohe Anzahl von Strukturen pro Kanallänge erzeugt werden.

Gemäß noch einer weiteren Ausgestaltung des Verfahrens wird der Wabenkörper unmittelbar nach dem Austritt aus dem Extrudierwerkzeug thermisch behandelt. Dabei wird der Grünling vorzugsweise abgekühlt, um die generierten Strukturen der Wandbereiche der Kanäle zu verfestigen.

Gemäß einer weiteren Ausgestaltung des Verfahrens wird der Wabenkörper mit den generierten Strukturen anschließend mit einer gewünschten Länge abgetrennt. Die Länge ist hier insbesondere von dem späteren Verwendungszweck des Wabenkörpers abhängig. Dabei ist es besonders vorteilhaft, den Wabenkörper nach dem Abtrennen thermisch zu behandeln. Hierbei wird insbesondere die Festigkeit des Wabenkörpers durch einen Sinterprozess erhöht. Dadurch ist gewährleistet, dass ein so hergestellter Wabenkörper auch über einen langen Zeitraum den hohen thermischen und dynamischen Belastungen in einem Abgassystem einer Verbrennungskraftmaschine standhält.

Gemäß einem weiteren Aspekt der Erfindung wird ein Extrudierwerkzeug zur Herstellung von extrudierten Wabenkörpern mit Kanälen vorgeschlagen, welche von Wandbereichen begrenzt sind, wobei dieses Extrudierwerkzeug eine Vielzahl von gehalterten Profilstiften und ein Gehäuse umfasst, die zusammen eine Extrudiermaske bilden. Das Extrudierwerkzeug zeichnet sich dadurch aus, dass die Extrudiermaske während des Herstellungsprozesses veränderbar ist, so dass Wandbereiche mit Strukturen formbar sind. Mit Extrudiermaske ist hierbei insbesondere der freie, für den Extrudierrohwerkstoff durchströmbare Bereich einer Querschnittsfläche gemeint, die im wesentlichen senkrecht zur Extrudierrichtung und durch den, vorzugsweise größten, Querschnitt der Profilstifte (ebenfalls senkrecht zur Extrudierrichtung) angeordnet ist. Die Extrudiermaske entspricht somit im wesentlichen einem Querschnitt des extrudierten Wabenkörpers. Mit Hilfe einer derartigen, zeitlich veränderbaren Extrudiermaske wird demnach die Formgebung des Wabenkörpers direkt beeinflusst. So können beispielsweise unterschiedliche Wandbereiche hinsichtlich ihrer Dicke bzw. Lage zueinander beeinflusst werden.

Hierzu sind zumindest eine vorgebbare Anzahl der Profilstifte und wenigstens Teilbereiche des Gehäuses relativ zueinander bewegbar, so dass Wandbereiche unterschiedlicher Dicke herstellbar sind. Eine derartige Relativbewegung kann als Rotiationsbewegung und/oder quer zur bevorzugten Extrudierrichtung ausgeführt sein.

Dabei ist es besonders vorteilhaft, das Gehäuse mit Segmenten auszuführen, die gegeneinander verschiebbar sind. Hierbei bieten sich insbesondere Segmente mit teilweise elastischen Eigenschaften an, die vorzugsweise nahe der Austrittsseite des Extrudierwerkzeugs angeordnet sind, um eine Beschädigung des Grünlings an der Außenwand zu vermeiden. Gegebenenfalls kann die dabei erzeugte strukturierte Außenwand des Grünlings in einem nachgeschalteten Schälprozess wieder die gewünschte glatte Außenfläche erhalten.

Weiter wird vorgeschlagen, dass eine Halterung der Profilstifte relativ zum Gehäuse bewegbar ist. Diese Halterung ist dabei vorzugsweise außerhalb des formgebenden Gehäuses angeordnet und weist insbesondere eine gitternetzartige Struktur auf. Vornehmlich werden die Gitterpunkte zur Befestigung bzw. Fixierung der Profilstifte im Gehäuse verwendet. Die Halterung kann dabei quer in Relation zu der bevorzugten Extrudierrichtung oder beispielsweise rotatorisch bewegt werden. Besonders vorteilhaft ist es, die Halterung der Profilstifte biegbar zu gestalten, wobei zur Erzeugung der Relativbewegung der Profilstifte gegenüber dem Gehäuse dieses gebogen oder verwunden wird. Bei einer relativ starren Verbindung der Profilstifte mit der Halterung wird, so die Lage der Profilstifte zueinander verändert.

Gemäß noch einer weiteren Ausgestaltung sind zumindest eine vorgebbare Anzahl von Profilstiften aus einem ferromagnetischen Material, wobei das Extrudierwerkzeug eine Magnetisiervorrichtung umfasst, welche die Relativbewegung der Profilstifte gegenüber dem Gehäuse bewirkt. Sind die Profilstifte aus einem ferromagnetischen Material, so kann das Generieren eines Magnetfeldes im Bereich der Profilstifte zu einer vorübergehenden Magnetisierung der Profilstifte fuhren, wobei sich diese beispielsweise zueinander hinbewegen. Nach dem Degenerieren eines solchen Magnetfeldes nehmen diese Profilstifte ihre ursprüngliche Position erneut ein. Das Magnetfeld kann dabei insbesondere die Frequenz der Relativbewegungen beeinflussen.

Gemäß einer noch weiteren Ausgestaltung weisen die Profilstifte eine veränderbare äußere Form auf. Indem diese beispielsweise ihren Querschnitt senkrecht zur Extrudierrichtung verändern, hat dies direkte Auswirkung auf die Extrudiermaske.

Das vorgeschlagene Verfahren wird nachfolgend anhand der Zeichnungen näher erläutert. Weiterhin wird eine besonders bevorzugte Ausführungsform eines Extrudierwerkzeugs erläutert.

Es zeigen:
- Figur 1: schematische eine zur Durchführung des vorgeschlagenen Verfahrens geeignete Vorrichtung,
- Figur 2: schematisch und perspektivisch einen extrudierten Wabenkörper,
- Figur 3: eine erste Ausführungsform von Strukturen der Kanalwände,
- Figur 4: eine zweite Ausführungsform von Strukturen der Kanalwände,
- Figur 5: eine dritte Ausführungsform von Kanälen in einem Wabenkörper und
- Figur 6: schematisch und perspektivisch den Aufbau einer Ausführungsform des Extrudierwerkzeugs.

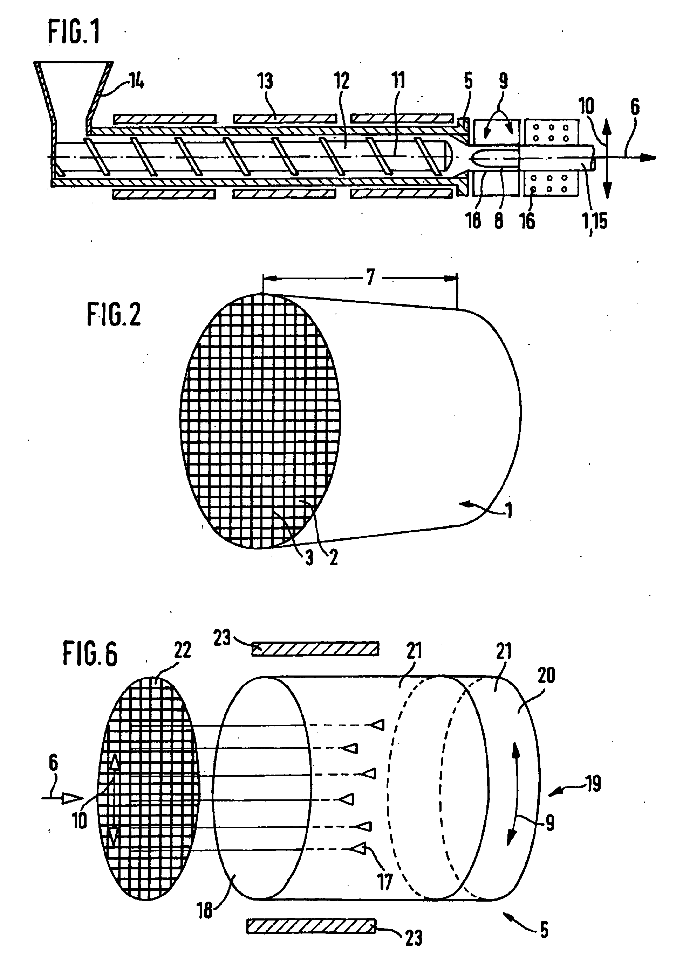

Figur 1 zeigt schematisch eine Vorrichtung zum Herstellen von extrudierten Wabenkörpern 1 mit Kanälen 2 (nicht dargestellt), insbesondere als Katalysator-Trägerkörper zur Reinigung von Abgasen einer Verbrennungskraftmaschine, wobei die Kanäle 2 von Wandbereichen 3 (nicht dargestellt) begrenzt sind, die zumindest teilweise mit Strukturen 4 (nicht dargestellt) versehen sind, wobei der Wabenkörper 1 mit dem Extrudierwerkzeug 5 so extrudiert wird, dass eine zusätzliche Relativbewegung 9, 10, 11 zwischen dem Wabenkörper 1 und dem Extrudierwerkzeug 5 stattfindet, die zu einer Verformung der Wandbereiche 3 der Kanäle 2 führt.

Dabei wird ein entsprechendes Granulat (beispielsweise umfassend keramisches Pulver, metallische Zusätzen, Gleitmittel) in einen Einfülltrichter 14 eines Extruders eingeführt, welches mit Hilfe einer Schnecke 12 durchmischt und verdichtet wird. Zur Unterstützung dieses Prozesses ist die Vorrichtung im Bereich der Schnecke 12 mit einer Heizvorrichtung 13 ausgeführt, die eine gute Formbarkeit des Ausgangsmaterials gewährleistet. Das Extrudierwerkzeug 5 weist ein Mundstück 8 auf, welches im wesentlichen von einem Gehäuse 18 begrenzt ist. Das Mundstück 8 bildet eine Extrudiermaske 19 auf, die letztendlich die Formgebung des Wabenkörpers 1 bzw. des kontinuierlich hergestellten Strangs 15, herstellt. Der aus dem Mundstück 8 austretende Strang 15 wird mit einer Haltevorrichtung 16 fixiert. Der Wabenkörper 1 bzw. Strang 15 tritt dabei in einer bevorzugten Extrudierrichtung 6 aus dem Mundstück 8 aus. Zur Erzeugung einer Struktur 4 auf Wandbereichen 3 des Wabenkörpers 1 erlaubt die Vorrichtung beispielsweise eine Rotation 9 des Mundstücks 8 sowie eine Verschiebung des hergestellten Wabenkörpers 1 bzw. Strangs 15 in Querrichtung 10 mittels der Haltevorrichtung 16. Somit können in einem kontinuierlichen Prozess verschiedene Wabenkörper 1 mit unterschiedlichen Strukturen 4 hergestellt werden, wobei eine qualitativ gleichmäßig Ausbildung von Strukturen 4 gewährleistet ist.

Figur 2 zeigt einen extrudierten Wabenkörper 1 aus keramischem Material. Der Wabenkörper 1 weist eine Vielzahl von Kanälen 2 auf, die von Wandbereichen 3 begrenzt sind. Der dargestellte Wabenkörper 1 ist zylindrisch und hat eine vorgebbare Länge 7. In Hinblick auf die Verwendung eines derartigen Wabenkörpers 1 als Katalysator-Trägerkörper im Abgassystem einer Verbrennungskraftmaschine ist es wünschenswert, die Anzahl der Kanäle 2 möglichst hoch zu wählen. Dabei werden Kanaldichten von größer 600 cpsi ("cells per square inch''), insbesondere größer 800 cpsi bevorzugt.

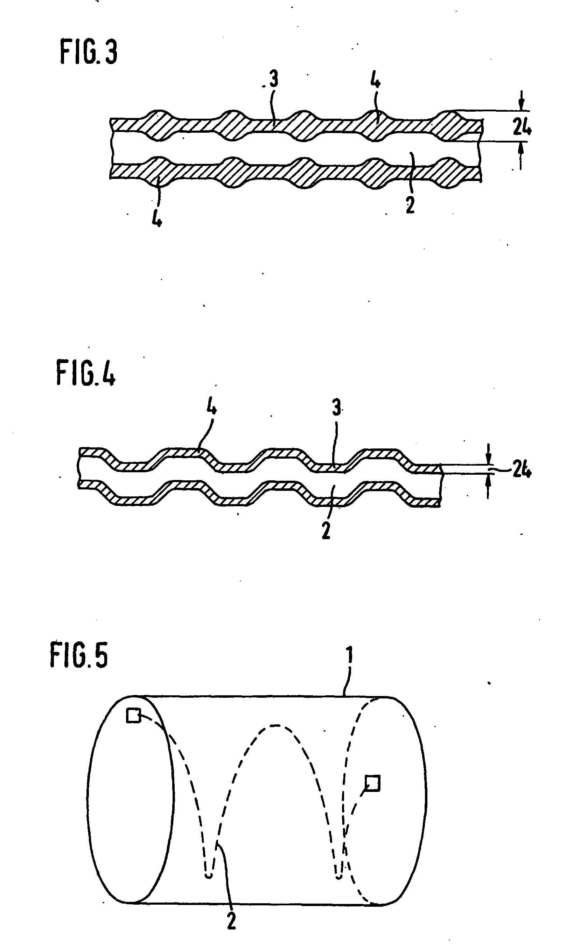

Figur 3 zeigt eine erste Ausführungsform eines mit dem vorgeschlagenen Verfahren hergestellten Kanals 2 eines Wabenkörpers 1. Die Wandbereiche 3, welche den Kanal 2 begrenzen, weisen Strukturen 4 auf, die beispielsweise durch ein zeitweises Stauchen des Wabenkörpers 1 während des Extrudierens hergestellt werden können. Die Strukturen 4 werden dabei durch eine variierende Dicke 24 der Wandbereiche 3 gebildet. Während des Stauchvorganges kommt es kurzzeitig zu Materialanhäufungen, welche die verstärkte Ausführung der Wandbereiche 3 zur Folge hat.

Figur 4 zeigt eine weitere schematische Detail-Schnittansicht eines Kanals 2. Die dargestellte Struktur 4 der Wandbereiche 3 wurde beispielsweise durch ein relatives Versetzen des Extrudierwerkzeugs 5 gegenüber dem Wabenkörper 1 bzw. dem Strang 15 hergestellt. Im Gegensatz zu der in Figur 3 dargestellten Ausführungsform weist die hier gezeigt eine im wesentlichen konstante Dicke 24 der Wandbereiche 3 auf.

Figur 5 zeigt schematisch und perspektivisch eine Ausführungsform eines Kanals 2 eines Wabenkörpers 1, wobei während des Extrudiervorgangs eine kontinuierliche Rotation des Wabenkörpers 1 gegenüber dem Extrudierwerkzeug 5 in einer Richtung 9 erfolgte. Auf diese Weise wurde ein Kanal 2 gebildet, der eine im wesentlichen gewindeähnliche Ausgestaltung aufweist. Dies führt in Hinblick auf den Einsatz eines derartigen Wabenkörpers zur Abgasreinigung zu einer verlängerten Verweilzeit des Abgases im Wabenkörper 1, wobei die Effektivität betreffend die Schadstoffumsetzung verbessert wird.

Figur 6 zeigt schematisch und perspektivisch eine bevorzugte Ausführungsform des erfindungsgemäßen Extrudierwerkzeugs 5. Das Extrudierwerkzeug 5 ist zur Herstellung von extrudierten, insbesondere keramischen Wabenkörpern 1 (nicht dargestellt) geeignet. Das Extrudierwerkzeug 5 weist eine Vielzahl von gehalterten Profilstiften 17 und ein Gehäuse 18 auf, die eine Extrudiermaske 19 bilden. Die Extrudiermaske 19 ist während des Herstellungsprozesses veränderbar, so dass Wabenkörper 1 herstellbar sind, deren Wandbereiche 3 Strukturen 4 aufweisen. Dabei wird das Extrudiermaterial (nicht dargestellt) zunächst in Extrudierrichtung 6 durch die Halterung 22 befördert, die in Form eines Gitters dargestellt ist. An der Halterung 22 sind die Profilstifte 17 befestigt, die sich bis in innere Bereiche des Gehäuses 18 hinein erstrecken. Ein Teilbereich 20 des Gehäuses 18 ist dabei relativ zu den Profilstiften 17 bewegbar. Dazu ist das Gehäuse 18 in Segmente 21 unterteilt, wobei das in Extrudierrichtung 6 zuletzt angeordnete Segment 21 rotierbar 9 ausgeführt ist. Das hat beispielsweise zur Folge, dass eine mit Hilfe der Profilstifte 17 erzeugte Wabenstruktur unmittelbar anschließend tortiert wird, wobei beispielsweise im wesentlichen gewindeähnliche Kanäle 2 gebildet werden.

Alternativ dazu bietet die dargestellte Ausführungsform eines Extrudierwerkzeugs 5 die Möglichkeit, die Position der Profilstifte 17 zueinander zu verändern. Dabei ist es beispielsweise möglich, die Halterung 22 zu biegen, so dass die Lage der Profilstifte 17 zueinander verändert wird. Zusätzlich weist das dargestellte Extrudierwerkzeug 5 eine Magnetisiervorrichtung 23 auf, welche die aus ferromagnetischem Material bestehenden Profilstifte 17 hinsichtlich ihrer Lage zueinander beziehungsweise in Relation zum Gehäuse 18 beeinflussen kann. Das Extrudierwerkzeug 5 bietet ferner eine dritte Möglichkeit, die Profilstifte 17 gegenüber dem Gehäuse 18 relativ zu bewegen. Dazu ist die Halterung 22 so ausgeführt, dass diese eine Verschiebung in Querrichtung 10 ermöglicht.

Das erfinderische Verfahren zum Herstellen von extrudierten Wabekörpern mit Kanälen, welche im Inneren Strukturen aufweisen, sowie ein, insbesondere zur Durchführung dieses Verfahrens geeignetes, Extrudierwerkzeug erlauben in fertigungstechnisch einfacher Weise die Herstellung einer Vielzahl von Strukturen, die zur Beeinflussung insbesondere eines durchströmenden Fluidstromes geeignet sind.

### Bezugszeichenliste

- 1: Wabenkörper
- 2: Kanal
- 3: Wandbereich
- 4: Struktur
- 5: Extrudierwerkzeug
- 6: Extrudierrichtung
- 7: Länge
- 8: Mundstück
- 9: Rotationsrichtung
- 10: Querrichtung
- 11: Achse
- 12: Schnecke
- 13: Heizvorrichtung
- 14: Einfülltrichter
- 15: Strang
- 16: Haltevorrichtung
- 17: Profilstift
- 18: Gehäuse
- 19: Extrudiermaske
- 20: Teilbereich
- 21: Segment
- 22: Halterung
- 23: Magnetisiervorrichtung

## Patentansprüche

1. Verfahren zum Herstellen von extrudierten Wabenkörpern (1) mit Kanälen (2), insbesondere als Katalysator-Trägerkörper zur Reinigung von Abgasen einer Verbrennungskraftmaschine, wobei die Kanäle (2) von Wandbereichen (3) begrenzt sind, die zumindest teilweise mit Strukturen (4) versehen sind, wobei der Wabenkörper (1) mit einem Extrudierwerkzeug (5) so extrudiert wird, dass eine zusätzliche Relativbewegung (9, 10, 11) zwischen dem Wabenkörper (1) und dem Extrudierwerkzeug (5) stattfindet, die zu einer Verformung der Wandbereiche (3) der Kanäle (2) führt, wobei der Wabenkörper (1) während des Extrudierens zumindest zeitweise gestaucht (11) und/oder gestreckt wird, so dass die Wandbereiche (3) unterschiedlich dick ausgeführt sind.

2. Verfahren nach Anspruch 1, bei dem das Extrudierwerkzeug (5) während des Extrudierens zumindest zeitweise rotiert (9).

3. Verfahren nach Anspruch 1 oder 2, bei dem der Wabenkörper (1) während des Extrudierens zumindest zeitweise rotiert (9).

4. Verfahren nach einem der Ansprüche 1 bis 3, bei dem das Extrudierwerkzeug (5) während des Extrudierens in Relation zu einer bevorzugten Extrudierrichtung (6) zumindest zeitweise versetzt (10) wird.

5. Verfahren nach einem der Ansprüche 1 bis 4, bei dem der Wabenkörper (1) während des Extrudierens in Relation zu einer bevorzugten Extrudierrichtung (6) zumindest zeitweise versetzt (10) wird.

6. Verfahren nach einem der Ansprüche 1 bis 5, bei dem der Wabenkörper (1) und/oder das Extrudierwerkzeug (5) während des Extrudierens zumindest zeitweise eine oszillierende Bewegung in Relation zu einer bevorzugten Extrudierrichtung (6) ausführt.

7. Verfahren nach einem der Ansprüche 1 bis 6, bei dem der Wabenkörper (1) unmittelbar nach dem Austritt aus dem Extrudierwerkzeug (5) thermisch behandelt wird.

8. Verfahren nach einem der Ansprüche 1 bis 7, bei dem der Wabenkörper (1) mit den Strukturen (4) anschließend mit einer gewünschten Länge (7) abgetrennt wird.

9. Verfahren nach Anspruch 8, bei dem der Wabenkörper (1) nach dem Abtrennen thermisch behandelt wird.

10. Extrudierwerkzeug (5) zur Herstellung von extrudierten Wabenkörpern (1) mit Kanälen (2), welche von Wandbereichen (3) begrenzt sind, umfassend eine Vielzahl von gehalterten Profilstiften (17) und ein Gehäuse (18), die eine Extrudiermaske (19) bilden, **dadurch gekennzeichnet, dass** die Extrudiermaske (19) während des Herstellungsprozesses veränderbar ist, so dass Wandbereiche (3) mit Strukturen (4) formbar sind, indem zumindest eine vorgebbare Anzahl der Profilstifte (17) und wenigstens Teilbereiche (20) des Gehäuses (18) relativ zueinander bewegbar (9, 10, 11) sind, so dass Wandbereiche (3) unterschiedlicher Dicke (24) herstellbar sind.

11. Extrudierwerkzeug (5) nach Anspruch 10, **dadurch gekennzeichnet, dass** das Gehäuse (18) Segmente (21) aufweist, die gegeneinander verschiebbar sind.

12. Extrudierwerkzeug (5) nach Anspruch 10 oder 11, **dadurch gekennzeichnet, dass** eine Halterung (22) der Profilstifte (17) relativ zum Gehäuse (18) bewegbar ist.

13. Extrudierwerkzeug (5) nach einem der Ansprüche 10 bis 12, **dadurch gekennzeichnet, dass** eine Halterung (22) der Profilstifte (17) biegbar ist.

14. Extrudierwerkzeug (5) nach einem der Ansprüche 10 bis 13, **dadurch gekennzeichnet, dass** zumindest eine vorgebbare Anzahl Profilstifte (17) aus einem ferromagnetischen Material sind, und das Extrudierwerkzeug (5) eine Magnetisiervorrichtung (23) umfasst, welche die Relativbewegung der Profilstifte (17) gegenüber dem Gehäuse (18) bewirkt.

15. Extrudierwerkzeug (5) nach einem der Ansprüche 10 bis 14, **dadurch gekennzeichnet, dass** die Profilstifte (17) eine veränderbare äußere Form aufweisen.

## Claims

1. Process for producing extruded honeycomb bodies (1) with passages (2), in particular as catalyst support bodies for the exhaust emission control of an internal combustion engine, wherein the passages (2) are bounded by wall regions (3) which are at least partly provided with structures (4), the honeycomb body (1) being extruded with an extrusion die (5) such that an additional relative movement (9, 10, 11) takes places between the honeycomb body (1) and the extrusion die (5), leading to a deformation of the wall regions (3) of the passages (2), the honeycomb body (1) being compressed (11) and/or stretched at least temporarily during the extrusion, so that the wall regions (3) are configured with different thicknesses.

2. Process according to claim 1, wherein the extrusion die (5) rotates (9) at least temporarily during the extrusion.

3. Process according to either claim 1 or claim 2, wherein the honeycomb body (1) rotates (9) at least temporarily during the extrusion.

4. Process according to any one of claims 1 to 3, wherein the extrusion die (5) is offset (10) in relation to a preferred direction of extrusion (6) at least temporarily during the extrusion.

5. Process according to any one of claims 1 to 4, wherein the honeycomb body (1) is offset (10) in relation to a preferred direction of extrusion (6) at least temporarily during the extrusion.

6. Process according to any one of claims 1 to 5, wherein the honeycomb body (1) and/or the extrusion die (5) performs an oscillating movement in relation to a preferred direction of extrusion (6) at least temporarily during the extrusion.

7. Process according to any one of claims 1 to 6, wherein the honeycomb body (1) is thermally treated directly after leaving the extrusion die (5).

8. Process according to any one of claims 1 to 7, wherein the honeycomb body (1) with the structures (4) is subsequently cut off to a desired length (7).

9. Process according to claim 8, wherein the honeycomb body (1) is thermally treated after it has been cut off.

10. Extrusion die (5) for producing extruded honeycomb bodies (1) with passages (2) which are bounded by wall regions (3), comprising a multiplicity of secured profiled pins (17) and a housing (18) which form an extrusion mask (19), **characterised in that** the extrusion mask (19) is variable during the production process, so that wall regions (3) with structures (4) may be formed, **in that** at least a predeterminable number of the profiled pins (17) and at least sub-regions (20) of the housing (18) are movable (9, 10, 11) in relation to one another, so that wall regions (3) may be produced which have different thicknesses (24).

11. Extrusion die (5) according to claim 10, **characterised in that** the housing (18) has segments (21) which are displaceable with respect to one another.

12. Extrusion die (5) according to either claim 10 or claim 11, **characterised in that** a securement (22) of the profiled pins (17) is movable in relation to the housing (18).

13. Extrusion die (5) according to any one of claims 10 to 12, **characterised in that** a securement (22) of the profiled pins (17) is bendable.

14. Extrusion die (5) according to any one of claims 10 to 13, **characterised in that** at least a predeterminable number of profiled pins (17) are made of a ferromagnetic material, and the extrusion die (5) comprises a magnetising device (23) which causes the relative movement of the profiled pins (17) with respect to the housing (18).

15. Extrusion die (5) according to any one of claims 10 to 14, **characterised in that** the profiled pins (17) have a variable outer form.

## Revendications

1. Procédé destiné à la fabrication de corps en nids d'abeilles extrudés (1) avec des canaux (2), notamment comme corps support de catalyseur pour l'épuration de gaz d'échappement d'une machine à combustion interne, dans quel cas les canaux (2) sont limités par des régions de parois (3) qui sont pourvues au moins partiellement de structures (4), le corps en nids d'abeilles (1) étant extrudé avec un outil d'extrusion (5) de manière telle qu'un mouvement relatif additionnel (9, 10, 11) a lieu entre le corps en nids d'abeilles (1) et l'outil d'extrusion (5) qui mène à une déformation des régions de parois (3) des canaux (2), le corps en nids d'abeilles (1) étant au moins temporairement comprimé (11) et/ou étiré durant l'extrusion, de sorte que les régions de parois (3) sont réalisées avec des épaisseurs différentes.

2. Procédé selon la revendication 1, dans lequel l'outil d'extrusion (5) est au moins temporairement en rotation (9) durant l'extrusion.

3. Procédé selon la revendication 1 ou 2, dans lequel le corps en nids d'abeilles (1) est au moins temporairement en rotation (9) durant l'extrusion.

4. Procédé selon l'une des revendications 1 à 3, dans lequel durant l'extrusion l'outil d'extrusion (5) est décalé (10) au moins temporairement par rapport à une direction d'extrusion (6) préférée.

5. Procédé selon l'une des revendications 1 à 4, dans lequel durant l'extrusion le corps en nids d'abeilles (1) est décalé (10) au moins temporairement par rapport à une direction d'extrusion (6) préférée.

6. Procédé selon l'une des revendications 1 à 5, dans lequel durant l'extrusion le corps en nids d'abeilles (1) et/ou l'outil d'extrusion (5) exécute au moins temporairement un mouvement oscillatoire par rapport à une direction d'extrusion (6) préférée.

7. Procédé selon l'une des revendications 1 à 6, dans lequel le corps en nids d'abeilles (1) est traité thermiquement directement après avoir quitté l'outil d'extrusion (5).

8. Procédé selon l'une des revendications 1 à 7, dans lequel le corps en nids d'abeilles (1) est détaché ensuite avec les structures (4) avec une longueur désirée (7).

9. Procédé selon la revendication 8, dans lequel le corps en nids d'abeilles (1) est traité thermiquement après avoir été détaché.

10. Outil d'extrusion (5) pour fabriquer des corps en nids d'abeilles extrudés (1), avec des canaux (2) qui sont limités par des régions de parois (2), comportant une multiplicité de tiges profilées (17) fixées et un boîtier (18) qui forment un masque d'extrusion (19), **caractérisé en ce que** le masque d'extrusion (19) est modifiable durant le processus de fabrication, de sorte que des régions de parois (3) peuvent être formées avec des structures (4) de façon telle qu'au moins un nombre prédéterminable des tiges profilées (17) et au moins des régions partielles (20) du boîtier (18) peuvent être déplacées relativement les uns par rapport aux autres (9, 10, 11), de sorte que des régions de parois (3) d'épaisseur différente (24) peuvent être fabriquées.

11. Outil d'extrusion (5) selon la revendication 10, **caractérisé en ce que** le boîtier (18) a des segments (21) qui sont déplaçables l'un par rapport à l'autre.

12. Outil d'extrusion (5) selon la revendication 10 ou 11, **caractérisé en ce qu'**une fixation (22) des tiges profilées (17) est mobile relativement au boîtier (18).

13. Outil d'extrusion (5) selon l'une des revendications 10 à 12, **caractérisé en ce qu'**une fixation (22) des tiges profilées (17) peut être pliée.

14. Outil d'extrusion (5) selon l'une des revendications 10 à 13, **caractérisé en ce qu'**au moins un nombre prédéterminable de tiges profilées (17) est constitué d'un matériau ferromagnétique et l'outil d'extrusion (5) comporte un dispositif de magnétisation (23) qui provoque le mouvement relatif des tiges profilées (17) par rapport au boîtier (18).

15. Outil d'extrusion (5) selon l'une des revendications 10 à 14, **caractérisé en ce que** les tiges profilées (17) ont une forme extérieure variable.
